# EUROPEAN PATENT APPLICATION

(11) **EP 3 308 968 A1**
(43) Date of publication of application: **18.04.2018**
(21) Application number: 17169902.8
(22) Date of filing: 08.05.2017
(51) Int. Cl.: B41J 3/407, G06F 17/24, H02G 1/00

(54) **METHOD AND SYSTEM FOR MAKING MARKINGS AT ELECTRIC WIRES AND CABLES OF A SWITCHBOARD**

(30) Priority: 11.10.2016 FI 20165771
(71) Applicant: Martten Finland Oy, 15610 Lahti (FI)
(72) Inventor: TOMMOLA, Jukka, 15320 Lahti (FI); SUOMI, Jussi, 15140 Lahti (FI); JAUHIAINEN, Risto, 15700 Lahti (FI)
(74) Representative: Genip Oy

(57) **Abstract**

Method for making markings at the electric wires and cables of a switchboard:
- the information (6) on each electric wire or cable (7) is established automatically on the basis of the electricity network information included in the switchboard by reading the electric wire or cable (7) type automatically from a switchboard diagram (9) and/or a cable installation list, which is in an electronic format, and by choosing, on the basis of the electric wire or cable (7) type, the diameter D or length of the electric wire or cable (7) automatically from the data structure or database;
- the information (6) on each electric wire or cable (7) is adapted to be printed onto a cable wrap label (6); and
- the information is transferred to a label printer (8) for the printing of the cable wrap labels (5) of the electric wires or cables (7) of a switchboard, wherein the information (6) on the electric wire or cable is printed onto the respective cable wrap label (5), and the cable wrap label (5) is cut so that its length P is the circumference dimension of each electric wire or cable (7) plus the fastening margin, P > π*D.

Also contains an independent system claim.

## Description

### Field of invention

The invention is related to electrical engineering, more specifically to the marking of electric wires and cables.

### Technical background

The electric wires and cables that come into and go out of switchboards have varying diameters.

According to a machine translation in English of the abstract of the Japanese patent application JPH10172362A, a checking area and a corresponding checking line are printed onto a cable wrap label used for the marking of cables in order to avoid errors resulting from the varying diameters of the cables, by means of which checking area and checking line it can be ensured that the label is not fastened to a cable with an incorrect thickness.

It is slow to make the cable markings, because a separate marking has to be printed for different electric wires and cables.

### Objective of invention

The objective of the invention is to expedite the marking of electric wires and cables.

This objective can be accomplished by means of the method and system according to the independent claims.

The dependent claims describe the advantageous embodiments of the method and system.

### Advantages of invention

In the method for making markings in the electric wires and cables of a switchboard, the information on each electric wire or cable is established automatically on the basis of the electricity network information included in the switchboard by reading the electric wire or cable type automatically from a switchboard diagram and/or a cable installation list, which is in an electronic format, and by choosing, on the basis of the electric wire or cable type, the diameter or length of the electric wire or cable automatically from the data structure or database, and the information on each electric wire or cable is adapted to be printed onto the cable wrap label. In addition to this, in the method the information is transferred to a label printer for the printing of the cable wrap labels of the electric wires and cables of the switchboard. The information on the electric wire or cable is printed onto the respective cable wrap label, and the cable wrap label is cut so that its length is the circumference dimension of each electric wire or cable plus the fastening margin.

By means of the method, the positioning of the information on the electric wire or cable to be printed onto the cable wrap labels and the printing of the cable wrap label can be automated: the cable wrap labels are printed directly on the basis of the electricity network information - most advantageously on the basis of the switchboard diagram information and/or on the basis of the cable installation list information. When the printing of the cable wrap labels is expedited, the entire process of making markings in electric wires and cables is also expedited.

For a long time now, many label printers have had a feature with which the cable diameter can be entered manually. The label printer calculates the length of the label from this and prints the cable wrap label.

The markings have conventionally been made on site by means of a label printer by feeding the information on each electric wire or cable manually one by one, or alternatively via a computer in serial printing by using cable installation lists. In serial printing, the length of a label printed by means of a label printer conventionally depends on the number of characters to be printed onto the label. Alternatively, it is possible that the user feeds the printing length manually individually for each label. However, it is troublesome to use cable installation lists in serial printing, because the cable installation lists do not contain the diameters of the electric wires or cables, just their types.

In accordance with the method according to the invention, the desired information is retrieved for the cable wrap label automatically from a cable installation list, main diagram etc., and the correct length of the cable wrap label is deducted automatically by utilising the information saved in the cable installation list, main diagram etc. concerning the cable type by comparing this to the database. We have created a database, which contains, when this is being written, more than 4200 different electric wires or cables, for which we have specified the diameter of each electric wire or cable as well as the length of the cable wrap label required by it. The number of electric wires or cables contained in the database presented here only contains the types of electric wires and cables by a few major manufacturers. In practice, the number of types of electric wires and cable existing in the world is probably much higher than this.

The fastening margin used is most preferably 3 - 7 mm, advantageously 4 - 6 mm and most advantageously essentially approx. 5 mm.

In the method, two of each cable wrap labels are printed. This provides cable wrap labels for both ends of each electric wire or cable. In this case, in the method both cable wrap labels are most advantageously ultimately fastened to each electric wire or cable of a switchboard.

The length of the cable wrap label is selected automatically most preferably on the basis of the text-format identifiers included in the electricity network information.

The system for making markings in the electric wires and cables of a switchboard comprises a data processing device and/or data processing system, into which electricity network information is saved or which is configured to read electricity network information from some system that contains electricity network information. In addition to this, the data processing device and/or data processing system is configured to adapt the information on each electric wire or cable to be printed onto a cable wrap label. Moreover, the system comprises a label printer. The data processing device and label printer are adapted to implement the method according to the invention.

### List of drawings

In what follows, the invention is presented in more detail by means of the exemplary embodiment shown in the enclosed drawings. Of the drawings:
- FIG 1: shows a switchboard diagram;
- FIG 2: shows a cable wrap label to be printed by means of a label printer; and
- FIG 3 - 5: shows the fastening of a cable wrap label to an electric wire or cable.

The same reference numbers refer to the same technical characteristics in all FIGs.

### Detailed description

By means of the method and system according to the invention, a cut-to-size cable wrap label 5 to be glued around an electric wire or cable 7 can be printed on the basis of an electric wire or cable type obtained from a switchboard diagram 9 or alternatively to this or in addition to this from a cable installation list, which cable wrap label 5 contains the printed identifiers of the electric wire or cable 7 as the information 6 on the electric wire or cable.

In the method, the information 6 on the electric wire or cable is established from the text-format descriptions (most advantageously at least from the switchboard identifier 1, electric wire or cable identifier 2, electric wire or cable description 3 and potentially also from the electric wire or cable type 4) found in a switchboard diagram 9 (most advantageously existing in an electronic format) or in a cable installation list (most advantageously existing in an electronic format).

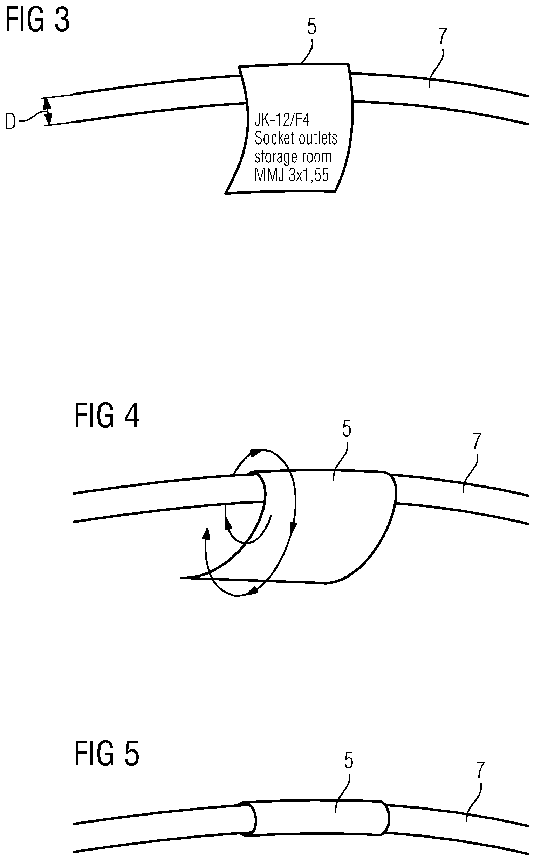

The information 6 on the electric wire or cable is combined in the method to the electric wire or cable type 4 automatically so that a program executed in a computer or automatic data processing device identifies the diameter D of the electric wire or cable 7 in question on the basis of the electric wire or cable 7 type 4 comprising the text-format description, and prints a cable wrap label 5 with text (in other words the cable information 6) and dimensions suited to it so that the length P of the cable wrap label 5 is selected so that the cable wrap label extends over a pre-selected distance (for example 3 - 7 mm, advantageously 4 - 6 mm and most advantageously approx. 5 mm) around the electric wire or cable 7 overlapping itself, in which case the cable wrap label 5 is fastenable by gluing the cable wrap label 5 around the electric wire or cable 7 to itself (see FIG 4). In this way, the cable wrap label 5 remains attached to the electric wire or cable 7 irrespective of the insulation material or potential coating of the electric wire or cable 7.

Alternatively, the text size used for the information 6 on the electric wire or cable is selected automatically on the basis of the diameter D of the electric wire or cable 7 so that electric wires or cables with very small diameters can also be marked so that the information 6 in the cable wrap label is readable.

The problem earlier has been that the electric wires and cables that come into and go out of switchboards have varying diameters, in which case it is slow to make markings in electric wires and cables, because it has been necessary to print a separate marking for different electric wires and cables.

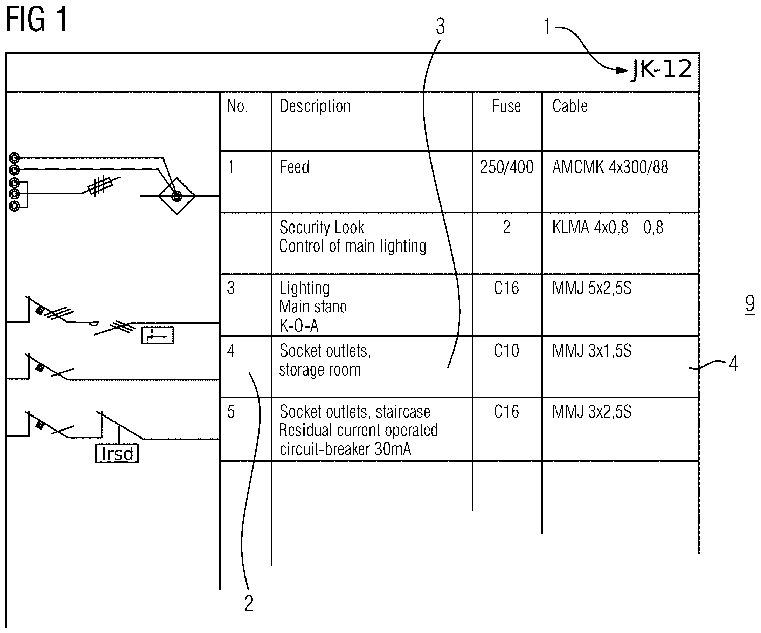

Signal cable "klm 2 x 0.8" has a diameter of 5.5 mm and power line "AMCMK 4 x 300//88 AN" has a diameter of 66 mm. In this way, it is clear that a cable wrap label with the same length cannot be used for all electric wires and cables.FIG 1 shows switchboard diagram 9 (here example of distribution board "JK12"). When the method is used for making markings in the electric wires and cables 7 of a switchboard diagram 9, for example in the electric wires and cables going out of said distribution board, the program executed in a computer or automatic data processing device identifies the electric wire or cable type 4 (for example "MMJ 3x1.5S") of fuse number 2 (for example "No. 4") from the switchboard diagram 9.The diameter D of the cable type 4 is known (for example for cable "MMJ 3x1.5S" it is known that the diameter D is 8.8 mm; the information can be for instance in a simple look-up table), and on the basis of this it is possible to calculate the circumference length of the electric wire or cable 7 (for example for cable "MMJ 3x1.5S" the circumference length obtained is 27.65 mm (circumference length = πD); the circumference lengths can also be for instance in a simple look-up table). Moreover, the output address of the cable is identified as "Socket outlets, storage room".

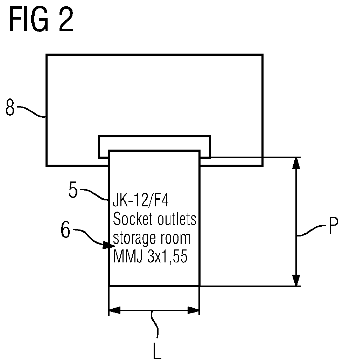

FIG 2 shows how a label printer 8 is used for printing a cable wrap label 5, and the label printer 8 is controlled to print the circumference length of the electric wire or cable 7 plus the fastening margin as the length P of the cable wrap label 5.

In this way, the label printer 8 can be used for automatically printing a cable wrap label 5 with a suitable length P (for example 32.65 mm), where the cable wrap label 5 contains the information (in other words, the information 6 on the electric wire or cable) desired in said electric wire or cable 7 as text descriptions. The width L of the cable wrap label 5 is selected to be most advantageously 36 mm. A single switchboard typically contains 50 - 150 electric wires or cables 7, with two markings typically needed in each. In this way, we can print all cable wrap labels 5 at the same time with the desired lengths and with the desired text descriptions (information 6 on the electric wire or cable).

The completed cable wrap label 5 is fastened by gluing around the electric wire or cable 7 (see the series of figures FIG 3 - 5). Since the length of the cable wrap label 5 is the circumference length of the electric wire or cable 7 plus the fastening margin (in other words most preferably for example 5 mm), it sticks to itself at the point of the fastening margin. In this way, the cable wrap label 5 stays firmly in place also in tricky electric wires or cables 7. If necessary, the length of the fastening margin can be easily either decreased or increased.

The invention should not be understood to be limited only by the below claims, but the invention is to be understood to include all their legal equivalents and the combinations of the embodiments presented.

### List of reference numbers used:

- 1: switchboard identifier
- 2: identifier of electric wire or cable
- 3: description of electric wire or cable
- 4: electric wire or cable type
- 5: cable wrap label
- 6: information on electric wire or cable
- 7: electric wire or cable
- 8: label printer
- 9: switchboard diagram

## Claims

1. A method for making markings in the electric wires and cables of a switchboard, **in which method:**
- the information (6) on each electric wire or cable (7) is established automatically on the basis of the electricity network information included in the switchboard by reading the electric wire or cable (7) type automatically from a switchboard diagram (9) and/or a cable installation list, which is in an electronic format, and by choosing, on the basis of the electric wire or cable (7) type, the diameter or length of the electric wire or cable (7) automatically from the data structure or database;
- the information (6) on each electric wire or cable (7) is adapted to be printed onto a cable wrap label (6); and
- the information is transferred to a label printer (8) for the printing of the cable wrap labels (5) of the electric wires or cables (7) of a switchboard, wherein the information (6) on the electric wire or cable is printed onto the respective cable wrap label (5), and the cable wrap label (5) is cut so that its length (P) is the circumference dimension of each electric wire or cable (7) plus the fastening margin (P > πD).

2. A method according to claim 1, **wherein:** the fastening margin is 3 - 7 mm, advantageously 4 - 6 mm and most advantageously essentially approx. 5 mm.

3. A method according to any one of the preceding claims, **wherein also:** two of each cable wrap labels (5) are printed.

4. A method according to claim 3, **wherein also:** both cable wrap labels (5) are fastened to each electric wire or cable (7) of a switchboard.

5. A method according to any one of the preceding claims, wherein the length (P) of the cable wrap label (5) is selected automatically on the basis of the text-format identifiers included in the electricity network information.

6. A method according to any one of the preceding claims, **wherein also:** the printing appearance of the information (6) on the electric wire or cable (7) is selected on the basis of the electric wire or cable (7) type, for example by including a bar code or data matrix in the information (6) only when the diameter of the electric wire or cable (7) is sufficiently large.

7. A system for making markings in the electric wires and cables of a switchboard, **which system comprises:**
- a data processing device and/or data processing system,
- into which electricity network information is saved or which is configured to read electricity network information from some system that contains electricity network information; and
- which is configured to adapt the information (6) on each electric wire or cable (7) to be printed onto a cable wrap label (6);
- a label printer (8); and where
the data processing device and label printer are adapted to implement the method according to any one of the preceding claims.
